# EUROPEAN PATENT APPLICATION

(11) **EP 4 726 446 A1**
(43) Date of publication of application: **15.04.2026**
(21) Application number: 25197073.7
(22) Date of filing: 20.08.2025
(51) Int. Cl.: G02B 6/38

(54) **HARDENED CONNECTOR FOR ENGAGING AT LEAST ONE OPTICAL FIBER WITH AN OPTICAL FIBER TERMINAL**

(30) Priority: 10.10.2024 IN 202411077096
(71) Applicant: Sterlite Technologies Limited, Gurugram, Haryana 122102 (IN)
(72) Inventor: Wang, Wayne, Shenzhen City, Guangdong Province, 518126 (CN); Gopi, Ajayakumar, 122102 Gurugram, Haryana (IN); Vinod, Arjun, 122102 Gurugram, Haryana (IN); Balachandran, Binod, 122102 Gurugram, Haryana (IN)
(74) Representative: Petraz, Gilberto Luigi

(57) **Abstract**

The present disclosure provides a hardened connector (100) for engaging at least one optical fiber (52) with an optical fiber terminal (70), the hardened connector (100) comprising: a first part (102), a second part (104), and a third part (106); the hardened connector (100) comprising an alignment mechanism (108) formed when at least two or the first part (102), the second part (104), and the third part (106) are engaged.

## Description

### TECHNICAL FIELD

Embodiments of the present disclosure relate to the field of wireless communication networks of optical fibres, and in particular, relates to a hardened connector for engaging at least one optical fiber with an optical fiber terminal.

The present application claims the benefit of Indian Application No. 202411077096 titled "HARDENED CONNECTOR FOR ENGAGING AT LEAST ONE OPTICAL FIBER WITH AN OPTICAL FIBER TERMINAL" filed by the applicant on October 10, 2024**,** which is incorporated herein by reference in its entirety.

### Background Art

Modern optical devices and optical communications systems widely use fiber optic cables. Fiber optic cables are often used to transmit light signals for high speed data transmission. A fiber optic cable typically includes an optical fiber or optical fibers, a buffer or buffers that surround the fiber or fibers, a strength layer that surrounds the buffer or buffers, and an outer jacket. The optical fibers function to carry optical signals.

Optical fiber refers to the technology and the medium for the transmission of data as light pulses along an ultrapure strand of glass, which is as thin as a human hair. For many years, optical fibers have been extensively used in high-performance and long-distance data and networking.

Telecommunication cables are ubiquitous and used for distributing all manner of data across vast networks. The majority of cables are electrically conductive cables (typically copper), although the use of optical fiber cable is growing rapidly in telecommunication systems as larger and larger amounts of data are transmitted. Additionally, as data transmissions increase, the fiber optic network is being extended closer to the end user which can be a premise, business, or a private residence.

Optical fiber cables utilize optical fibers to transmit signals such as voice, video, image, data or information. Optical fibers are strands of glass fiber processed so that light beams transmitted through the glass fiber are subject to total internal reflection wherein a large fraction of the incident intensity of light directed into the fiber is received at the other end of the fiber.

Fiber optic cables are widely used to transmit light signals for high-speed data transmission. A fiber optic cable typically includes: (1) one or more optical fibers; (2) one or more buffers that surround the one more optical fibers; (3) at least one strengthening layer that surrounds the one mor more buffers; and (4) an outer jacket. Moreover, typical optical fiber includes at least one cylindrical glass region and a polymer region surrounding the at least one cylindrical glass region. The at least one cylindrical glass region comprises at least one core surrounded by a cladding region.

In case the fiber optic cable is to be connected to an optical fiber terminal, there is provided at least one connector at the end of the fiber optic cable. The connector generally includes a ferrule that receives the at least one cylindrical glass region of the at least one optical fiber of the fiber optic cable. The optical fiber terminal includes ports (i.e., receptacles) for receiving the connector. Each port of the optical fiber terminal generally includes an alignment mechanism for aligning the connector in a particular orientation. Only when the ferrule is properly aligned in the port of the optical fiber terminal, an optical signal can pass from the fiber optic cable to the optical fiber terminal. Additionally, the port of the optical fiber terminal comprises a locking mechanism for locking the connector so that the connector does not get inadvertently detached from the port of the optical fiber terminal.

The optical fibre industry is constantly involved in reducing the size of the hardened connector. However, creating a hardened connector having smaller size, providing an alignment mechanism on the hardened connector which is easy to manufacture as well as which properly aligns the ferrule of the hardened connector with the ferrule in the optical fiber terminal port becomes a technical challenge. Also, it has been found that simply reducing the size of the alignment mechanism provided on the hardened connector does not serve the purpose.

Additionally, creating a hardened connector having smaller size, providing a locking mechanism on the hardened connector which is easy to manufacture and which ensures that the connector does not get inadvertently detached from the port of the optical fiber terminal becomes a technical challenge. Also, it has been found that simply reducing the size of the locking mechanism provided on the hardened connector does not serve the purpose.

Accordingly, to overcome the disadvantages of the prior arts, there is a need for a technical solution to provide an alignment mechanism on the hardened connector which is ease to manufacture, which properly aligns the ferrule of the hardened connector with the ferrule in the optical fiber terminal port, and also which allows for reducing a size of the hardened connector to overcome the above-stated limitations in the prior arts. Thus, there exists a need to provide a locking mechanism on the hardened connector which is easy to manufacture, which prohibits the connector from getting inadvertently detached from the port of the optical fiber terminal, and also which allows for reducing the size of the hardened connector.

Therefore, the present disclosure discloses a hardened connector for engaging at least one optical fiber with an optical fiber terminal.

### SUMMARY OF THE DISCLOSURE

Embodiments of the present disclosure relates to a hardened connector for engaging at least one optical fiber with an optical fiber terminal. The hardened connector comprises a first part, a second part, and a third part, one or more of an alignment mechanism and a locking mechanism formed when at least two of the first part, the second part, and the third part are engaged. In particular, the alignment mechanism comprises a first alignment part formed on one of the first part, the second part, and the third part and a second alignment part formed on another of the first part, the second part, and the third part.

According to the first aspect of the present disclosure, the hardened connector has a small form factor, having a diameter less than or equal to 13 mm.

According to the second aspect of the present disclosure, the first part comprises a body portion configured to receive at least one optical fiber, the at least one optical fiber having at least one cylindrical glass region surrounded by a polymer region, the at least one cylindrical glass region having a first diameter and the at least one optical fiber having a second diameter. Further, the third part comprises an optical plug comprising ferrule and the ferrule comprising a ferrule bore having a third diameter (D3), the optical plug being adapted to retain the at least one cylindrical glass region of the at least one optical fiber.

In accordance with an embodiment of the present disclosure, the first diameter (D1), the second diameter (D2), and the third diameter (D3) follow the relationship D1 < D3 < D2.

According to the third aspect of the present disclosure, the third diameter (D3) has a value greater than the first diameter (D1) but less than or equal to D1 plus 5 microns.

According to the fourth aspect of the present disclosure, the second part comprises a connecting portion connecting the optical plug with the body portion. In particular, the body portion comprises a first alignment part and the connecting portion comprises a second alignment part. Moreover, the first alignment part and the second alignment part together form the alignment mechanism. Further, at least one optical fiber passes through the body portion and the connecting portion before terminating at the ferrule of the optical plug.

According to the fifth aspect of the present disclosure, the body portion includes at least two fingers spaced apart from one another and the connecting portion comprises a guiding channel which is located between the two fingers. In particular, the guiding channel together with at least two fingers functions as the alignment mechanism to maintain alignment of the hardened connector when the hardened connector is coupled to the fiber terminal.

According to the sixth aspect of the present disclosure, the locking mechanism comprises a protruded skirt portion formed at an intermediate portion of the connecting portion or at an intermediate portion of the optical plug and a front end of the body portion that co-operates with the protruded skirt portion. In particular, the protruded skirt portion has a fourth diameter (D4), the front end of the body portion having a fifth diameter (D5), the fourth diameter (D4) being greater than the fifth diameter (D5). Further, the protruded skirt portion and the front end of the body portion together define the locking mechanism.

According to the seventh aspect of the present disclosure, a rear end of the body portion includes a crimp ring to hold at least one strengthening member of at least one optical fiber. In particular, the rear end of the body portion includes a boot assembly encapsulating the crimp ring to provide flexibility to at least one optical fiber.

Another embodiment of the present disclosure, a process of coupling at least one optical fiber forming part of a fiber optic cable to the hardened connector as defined above. The fiber optic cable comprises at least one optical fiber surrounded by one or more buffer layers, one or more strengthening layer surrounding the one or more buffer layers and an outer jacket surrounding the one or more strengthening layer, the process comprising: removing the outer jacket, the one or more strengthening layer and the one or more buffer layers of the fiber optic cable thereby exposing the at least one optical fiber; inserting the least one optical fiber inside a body portion and a connecting portion forming part of the hardened connector; removing a polymer region of the one or more optical fiber to expose at least one cylindrical glass region; terminating the at least one cylindrical glass region at a ferrule of the optical plug; engaging the optical plug with the connecting portion; and engaging the connecting portion the body portion.

The disclosure further provides a process of coupling the hardened connector as defined above to an optical fiber terminal, aligning the hardened connector with respect to a port of the optical fiber terminal using the alignment mechanism formed on the hardened connector. In particular, the alignment mechanism formed on the hardened connector is aligned with a counter alignment mechanism formed in the port of the optical fiber terminal. Thereafter, the hardened connector is inserted into the port of the optical fiber terminal, wherein inserting of the hardened connector into the optical fiber terminal causes locking of the hardened connector vis-a-vis the port of the optical fiber terminal. Further, inserting the hardened connector into the port of the optical fiber terminal causes the counter locking mechanism formed in the port of the optical fiber terminal to come in contact with the locking mechanism formed on the hardened connector.

According to the eighth aspect of the present disclosure, the hardened connector for engaging at least one optical fiber with an optical fiber terminal. In particular, the hardened connector comprises an optical plug to terminate exactly one optical fiber; and an outer cover mounted on the optical plug to allow the hardened connector to connect with a connector adapter socket. Further, the outer cover has a width less than 7mm.

In accordance with an embodiment of the present disclosure, the outer cover is an SC connector outer cover mounted over the fiber plug.

In accordance with an embodiment of the present disclosure, the connector adapter socket is a SC connector adapter socket.

According to the ninth aspect of the present disclosure, a hardened connector for engaging at least one optical fiber with an optical fiber terminal. In particular, the hardened connector comprising a first part, a second part and a third part; the second part mediates a coupling between the first part and the third part, and at least one of the first part, the second part and the third part is made of Polycarbonate-Acrylonitrile Butadiene Styrene (PC-ABS) material and the like, a diameter of the hardened connector being less than or equal to 13 mm.

In accordance with an embodiment of the present disclosure, a pre-connectorized cable, comprising an optical fiber cable with at least one optical fiber and one or more strength members packed inside a sheath; a hardened connector having a tubular housing with an opening to enter the optical fiber inside the tubular housing, the opening includes a crimp ring for holding the one or more strength members outside the tubular housing.

In an embodiment of the disclosure, the tubular housing holds a ferrule assembly of an optical plug opposite to the opening. The crimp ring allows at least one optical fiber to enter inside the tubular housing. In particular, the tubular housing is a multi-part assembly. Moreover, the tubular housing is formed by combining the body portion and the connecting portion of the multi-part assembly. Further, the optical fiber cable is at least one of the round cables or a flat cable.

The foregoing objectives of the present disclosure are attained by employing a hardened connector for engaging at least one optical fiber with an optical fiber terminal.

### BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.
Fig. 1 is a pictorial snapshot a sectional view of a fiber optical cable being connected to an optical fiber terminal using a hardened connector in accordance with an embodiment of the present disclosure;
Fig. 2 is a pictorial snapshot a sectional view of a fiber optical cable connected to the optical fiber terminal using a hardened connector and the hardened connector being oriented in a predetermined manner within the fiber optical terminal in accordance with an embodiment of the present disclosure;
Fig. 3 is a pictorial snapshot an exploded view of a hardened connector which is connected to an end of a round shaped fiber optic cable in accordance with an embodiment of the present disclosure;
Fig. 4 is a pictorial snapshot an assembled view of the hardened connector connected to an end of the round shaped fiber optic cable in accordance with an embodiment of the present disclosure;
Fig. 5 is a pictorial snapshot a first assembled view of the body portion and the connection portion in accordance with an embodiment of the disclosure;
Fig. 6 is a pictorial snapshot a non-assembled state of the body portion and the connection portion in accordance with an embodiment of the disclosure;
Fig. 7 is a pictorial snapshot an assembled view of the body portion and the connection portion in accordance with an embodiment of the disclosure;
Fig. 8 is a pictorial snapshot an exploded view of a hardened connector that interconnects a flat fiber optic cable with an optical fiber terminal in accordance with an embodiment of the disclosure;
Fig. 9 is a pictorial snapshot a first assembled view of a hardened connector having a multi-fiber optical plug, adapted to receive multiple optical fibers in accordance with an embodiment of the disclosure;
Fig. 10 is a pictorial snapshot a second assembled view of a hardened connector having a multi-fiber optical plug, adapted to receive multiple optical fibers in accordance with an embodiment of the disclosure;
Fig. 11 is a pictorial snapshot an exploded view of a hardened connector having a multi-fiber optical plug adapted to receive multiple optical fibers in accordance with an embodiment of the disclosure;
Fig. 12 is a pictorial snapshot an assembled view of a hardened connector with an outer cover, the outer cover allowing the hardened connector to be connected to a standard Subscriber Connector (SC connector) adaptor socket, in accordance with an embodiment of the disclosure;
Fig. 13 is a pictorial snapshot an exploded view of a hardened connector and an outer cover, the outer cover allowing the hardened connector to be connected to a standard SC connector adapter, in accordance with an embodiment of the disclosure;
Fig. 14 is a pictorial snapshot an exploded view of fiber optic cable assembly and a standard SC connector adapter;
Fig. 15 is a pictorial snapshot an assembled view of fiber optic cable and a standard SC connector adapter;
Fig. 16 is a pictorial snapshot an assembled view of a hardened connector with an outer cover being connected to the fiber optic cable having the standard SC connector adapter connected thereto, in accordance with an embodiment of the disclosure;
Fig. 17 is a pictorial snapshot a flow chart for connecting the fiber optic cable having the hardened connector to an optical fiber terminal, in accordance with an embodiment of the disclosure; and
Fig. 18 is a pictorial snapshot of a flow chart for connecting the hardened connector to the optical fiber terminal, in accordance with an embodiment of the disclosure.

The optical fiber is illustrated in the accompanying drawings, which like reference letters indicate corresponding parts in the various figures. It should be noted that the accompanying figure is intended to present illustrations of exemplary embodiments of the present disclosure. This figure is not intended to limit the scope of the present disclosure. It should also be noted that the accompanying figure is not necessarily drawn to scale.

### DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

### Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". Throughout this specification, unless the context requires otherwise the word "comprise", and variations such as "comprises" and "comprising", will be understood to imply the inclusion of a stated element or step or group of element or steps but not the exclusion of any other element or step or group of element or steps.

**The following brief definition of terms shall apply throughout the present disclosure:**
Optical fiber- a light guide that provides high-speed data transmission. The optical fiber has one or more glass core regions and one or more glass cladding regions. The light moving through the glass core regions of the optical fiber relies upon the principle of total internal reflection, where the glass core regions have a higher refractive index (n1) than the refractive index (n2) of the glass cladding region of the optical fiber.
Core region - Term core region as used herein refers to an inner most cylindrical structure present in the center of the optical fiber, that is conFig.d to guide the light rays inside the optical fiber.
Cladding region - Term cladding region as used herein refers to one or more layered structure covering the core region of the optical fiber from the outside, that is conFig.d to possess a lower refractive index than the refractive index of the core region to facilitate total internal reflection of light rays inside the optical fiber. Further, the cladding region of the optical fiber may include an inner cladding layer coupled to the outer surface of the core region of the optical fiber and an outer cladding layer coupled to the inner cladding from the outside.
Coating layers - The bare fiber is coated with one or more primary coating layer and secondary coating layer or an ink layer.
Buffer layers - The buffer layer may be in the form of one or more buffer coating or one or more buffer tube. The buffer layer protects the delicate optical fibers from physical damage, moisture, and other environmental factors.
Buffer Coating - This is a protective layer applied directly onto the optical fiber. It is typically made of a soft, plastic material, such as acrylate, which cushions the fiber and protects it from microbends, stress, and minor abrasions.
Buffer Tube - This is a more rigid protective tube that surrounds one or more coated optical fibers. Buffer tubes are usually made from plastic materials like polyethylene or polybutylene terephthalate (PBT). They provide additional protection from physical impacts, moisture, and other environmental factors. Buffer tubes can contain gel or other filling materials to further protect the fibers from moisture.
Strengthening layer - The at least one strengthening layer surrounds the one or more buffers in an optical fiber cable and typically provides additional mechanical strength and protection to the optical fibers, helping to prevent damage during installation and operation. Some of the common types of strength members used in optical fiber cables include Aramid Yarn, Steel wire, Fiber Reinforced Plastic, and Glass Reinforced Plastic.
Outer jacket - The outer jacket of an optical fiber cable is the outermost layer that encases and protects the entire cable assembly. The outer jacket provides a robust shield against environmental factors, mechanical damage, and chemical exposure. The outer jacket shields the internal components, including the optical fibers, buffer tubes, and strength members, from physical damage, moisture, chemicals, UV radiation, and other environmental factors. The outer jacket enhances the longevity of the optical fiber cable. Some of the common materials used for making the outer jacket include polyethylene (PE), polyvinyl chloride (PVC), polyurethane (PU), and low smoke zero halogen (LSZH) compounds.

Hardened Connector: A hardened connector is a type of fiber optic connector specifically designed to provide robust, reliable connections in environments that are subject to harsh conditions. These conditions can include extreme temperatures, moisture, dust, mechanical stress, and other environmental factors that would typically degrade the performance of standard fiber optic connectors. The hardened connector comes in the following forms: Hardened SC (H-SC) Connectors, Hardened LC (H-LC) Connectors, and Hardened MPO Connectors.

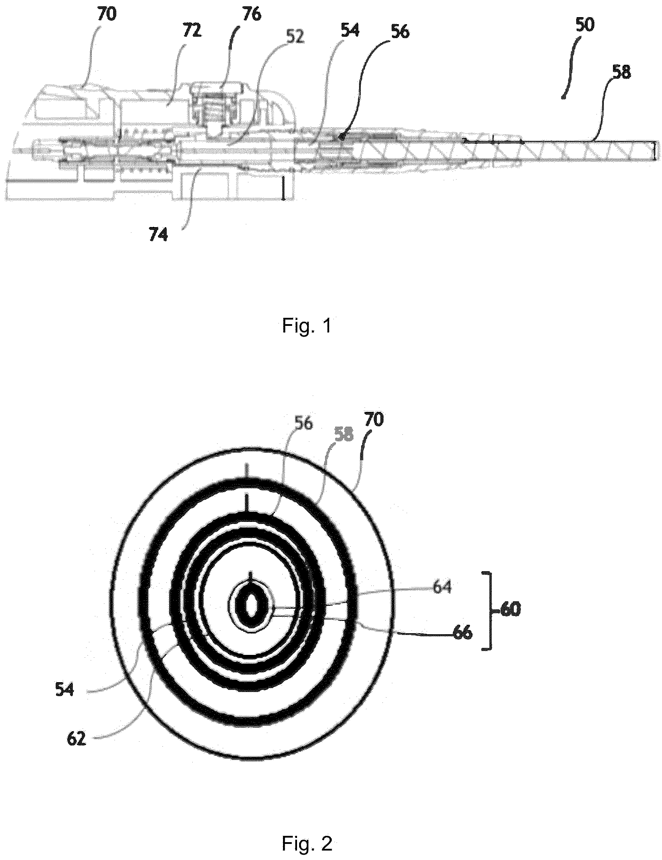

Fig. 1 and Fig. 2 are pictorial snapshots illustrating a sectional view of a fiber optical cable connected to the optical fiber terminal using a hardened connector and the hardened connector being oriented in a predetermined manner within the fiber optical terminal in accordance with an embodiment of the present disclosure.A fiber optic cable (50) connected to an optical fiber terminal (70) includes one or more optical fibers (52); one or more buffers (54) that surrounds the one more optical fibers (52); at least one strengthening layer (56) that surrounds the one mor more buffers (54); and an outer jacket (58) that surrounds the at least one strengthening layer (56). In particular, the optical fiber (52) typically comprises at least one cylindrical glass region (60) and a polymer region (62) surrounding the at least one cylindrical glass region (60). Further, the at least one cylindrical glass region (60) comprises at least one core (64) surrounded by a cladding region (66).

In accordance with an embodiment of the present disclosure, a hardened connector (100) is attached to an end of the fiber optic cable (50) for connecting the fiber optic cable (50) to an optical fiber terminal (70). In particular, the optical fiber terminal (70) comprises a port (72) which receives the hardened connector (100), thereby connecting the fiber optic cable (50) to the optical fiber terminal (70). The port (72) of the optical fiber terminal (70) includes a counter alignment mechanism (74) that co-operates with an alignment mechanism (108) (best visible in Fig.s 4 to 7) provided on the hardened connector (100) so as to align the hardened connector (100) in a particular orientation with respect to the port (72) as shown in Fig. 2. Only when the hardened connector (100) is properly aligned in the port (72) of the optical fiber terminal (70), an optical signal can pass from the fiber optic cable (50) to the optical fiber terminal (70). Further, the port (72) of the optical fiber terminal (70) comprises a counter locking mechanism (76) for enabling a locking mechanism (130) (best visible in Fig.s 4 to 7) provided on the hardened connector (100) so that the hardened connector (100) does not get inadvertently detached from the port (72) of the optical fiber terminal (70).

In accordance with an embodiment of the present disclosure, the counter alignment mechanism (74) provided in the port (72) of the optical fiber terminal (70) is in the form of an internal sleeve. In particular, the counter locking mechanism (76) provided in the port (72) of the optical fiber terminal (70) is in the form of spring-loaded slider that comes in contact with the locking mechanism (130) (best visible in Fig.s 4 to 7) provided on the hardened connector (100). Once the spring-loaded slider has come in contact with the locking mechanism (130) (best visible in Fig.s 4 to 7) provided on the hardened connector (100), the hardened connector (100) is prohibited from inadvertently getting detached from the port (72) of the optical fiber terminal (70). However, by operating the spring-loaded slider, the hardened connector (100) can be detached from the port (72) (which is an intended detachment of the hardened connector (100) from the port (72) of the optical fiber terminal (70)). The construction of the locking mechanism (130) (best visible in Fig.s 4 to 7) provided on the hardened connector (100) should be such that the counter locking mechanism (76) does not require separate manual operation for locking purposes.

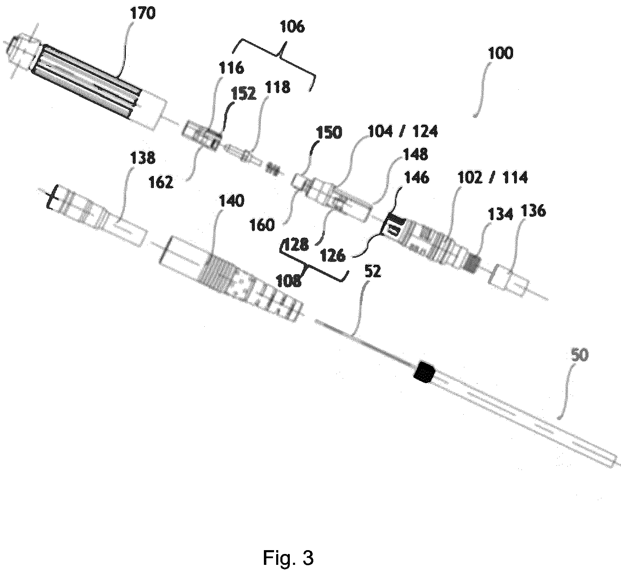

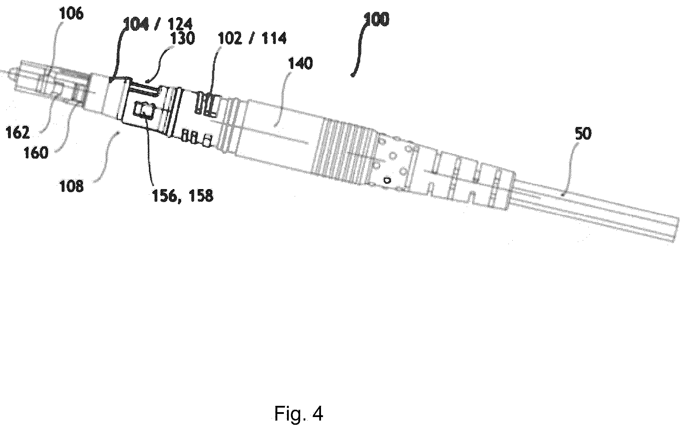

Fig. 3 and Fig. 4 are pictorial snapshots illustrating an exploded view and assembled view of the hardened connector connected to an end of the round shaped fiber optic cable in accordance with an embodiment of the present disclosure.In particular, the hardened connector (100) comprises a first part (102), a second part (104), and a third part (106). Moreover, the first part (102) comprises a body portion (114); the third part (106) comprises an inner cover (116) comprising ferrule (118); and the second part (102) comprises a connecting portion (124). The first part (102), a second part (104), and a third part (106) are disposed along a length direction of the hardened connector (100). Further, the second part (104) which is the connecting portion (124) connects the first part (102) i.e. the body portion (114) to the third part (106) i.e. the optical plug (116). The optical signal propagating through the optical fiber (52) enters into the ferrule (118) and is then transmitted to the optical fiber terminal (70).

It may be noted that the at least one cylindrical glass region (60) has a first diameter (D1) and at least one optical fiber (52) has a second diameter (D2); the ferrule (118) comprises a ferrule bore (not shown) having a third diameter (D3), the first diameter (D1), the second diameter (D2), and the third diameter (D3) follow the relationship D1 < D3 < D2. By way of a non-limiting example, the third diameter (D3) has a value greater than the first diameter (D1) but less than or equal to D1 plus 5 microns. There may be provided a filler material within the optical plug (116) to retain the at least one cylindrical glass region (60) of the at least one optical fiber (52) within the ferrule (118).

In accordance with an embodiment of the present disclosure, the hardened connector (100) may further comprise a crimp ring (136) to hold the fiber optic cable (50). In particular, the crimp ring (136) holds the strengthening layer (56) outside the body portion (114) of the hardened connector (100) and allows only optical fiber (52) to enter inside the body portion (114) of the hardened connector (100). Moreover, the hardened connector (100) comprise a heat shrink tube (138) to provide sealing at the crimp ring (136). Further, the heat shrink tube (138) may be connected in a rearward direction from a rear end (134) of the body portion (114).

In accordance with an embodiment of the present disclosure, the heat shrink tube (138) may be connected to the body portion (114) and may be adopted to surround a portion of the fiber optic cable (50) proximate to the end which is connected to the hardened connector (100). In particular, the heat shrink tube (138) may be slidably connected to the rear end (134) of the body portion (114). In some aspect, the hardened connector (100) may be made of Polycarbonate-Acrylonitrile Butadiene Styrene (PC-ABS) material and the like. The Polycarbonate-Acrylonitrile Butadiene Styrene (PC-ABS) material may for example be a CICOLOY C2950 material.

In accordance with an embodiment of the present disclosure, the hardened connector (100) may further comprise a boot assembly (140) protruding in a rearward direction from a rear end (134) of the body portion (114). In particular, the boot assembly (140) may be located concentric to the heat shrink tube (138) and surrounding the heat shrink tube (138). Moreover, the boot assembly (140) may be connected to either the body portion (114) or the heat shrink tube (138) and may be adopted to surround a portion of the fiber optic cable (50) proximate to the end which is connected to the hardened connector (100). Further, the hardened connector (100) may additionally comprise a cap (170) which is removably attachable to the hardened connector (100) and may be used to deploy the hardened connector (100) through a duct with a minimum diameter of 13.5 mm. Additionally, the hardened connector (100) may comprise a crimp ring (136) to hold the fiber optic cable (50).

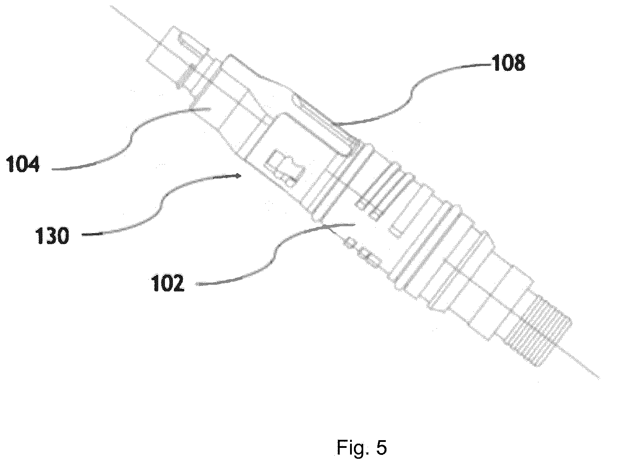

Fig. 5, Fig. 6 and Fig. 7 are pictorial snapshots of the first assembled view, a non-assembled state and yet another assembled view of the body portion and the connection portion in accordance with an embodiment of the disclosure.

In particular, the body portion (114) comprises a front end (146) and the connecting portion (124) comprises a rear end (148), with the front end (146) of the body portion (114) being engaged with the rear end (148) of the connecting portion (124). Moreover, the front end (146) of the body portion (114) comprises a first attachment member (156). Further, the rear end (148) of the connecting portion (124) comprises a first counter attachment member (158). The first attachment member (156) and the first counter attachment member (158) function to attach the body portion (114) and the connecting portion (124).

In accordance with an embodiment of the present disclosure, the connecting portion (124) comprises a front end (150) and the optical plug (116) comprises a rear end (152), with the front end (150) of the connecting portion (124) being engaged with the rear end (152) of the optical plug (116). In particular, the front end (150) of the connecting portion (124) comprises a second attachment member (160) and the rear end (152) of the optical plug (116) comprises a second counter attachment member (162). Further, the second attachment member (160) and the second counter attachment member (162) function to attach the optical plug (116) and the connecting portion (124).

In accordance with an embodiment of the present disclosure, the hardened connector (100) comprises an alignment mechanism (108) formed when at least two or the first part (102), the second part (104), and the third part (106) are engaged. By way of a non-limiting example, the alignment mechanism (108) comprises a first alignment part (110) formed on one of the first part (102), the second part (104), and the third part (106) and a second alignment part (112) formed on another of the first part (102), the second part (104), and the third part (106). Further, the body portion (114) comprises the first alignment part (110) and the connecting portion (124) comprises the second alignment part (112), the first alignment part (110) and the second alignment part (112) together forming the alignment mechanism (108).

In accordance with an embodiment of the present disclosure, the front end (146) of the body portion (114) comprises at least two fingers (126) spaced from each other and projecting in a front direction. Particularly, the rear end (148) of the connecting portion (124) comprises a guiding channel (128) which is locatable between the two fingers (126) when the rear end (148) of the connecting portion (124) is inserted into the front end (146) of the body portion (114). Further, the at least two fingers (126) together with the guiding channel (128) functions as the alignment mechanism (108).

In accordance with an embodiment of the present disclosure, the hardened connector (100) comprises a locking mechanism (130) formed when at least two or the first part (102), the second part (104), and the third part (106) are engaged. By way of a non-limiting example, the locking mechanism (130) comprises a first locking part (164) formed on one of the first part (102), the second part (104), and the third part (106) and a second locking part (166) formed on another of the first part (102), the second part (104), and the third part (106). Particularly, the connecting portion (124) comprises the first locking part (164) and the body portion (114) comprises the second locking part (166), the first locking part (164) and the second locking part (166) together forming the locking mechanism (130). Moreover, an intermediate portion of the connecting portion (124) comprises a protruded skirt portion (132) which acts as the first locking part (164). When the rear end (148) of the connecting portion (124) is inserted into the front end (146) of the body portion (114), the protruded skirt portion (132) which acts as the first locking part (164) comes in abutting relation with the front end (146) of the body portion (114), which acts as the second locking part (166).

In accordance with an embodiment of the present disclosure, the protruded skirt portion (132) has a fourth diameter (D4) while the front end (146) of the body portion (114) has a fifth diameter (D5), such that the fourth diameter (D4) being greater than the fifth diameter (D5). Thus, the protruded skirt portion (132) i.e. the first locking part (164) and the front end (146) of the body portion (114) i.e. the second locking part (166) together define the locking mechanism (130).

In accordance with an embodiment of the present disclosure, the alignment mechanism (108) is angularly offset from the locking mechanism (130). For instance, the alignment mechanism (108) may be offset from the locking mechanism (130) by an angle equal to about 180° along a circumferential direction of the hardened connector (100).

While in Fig. 3 the hardened connector (100) which shown to be connected to a round shaped fiber optic cable (50), in an alternative embodiment of the disclosure, the hardened connector (100) may also be used for interconnecting a flat fiber optic cable with an optical fiber terminal (70).

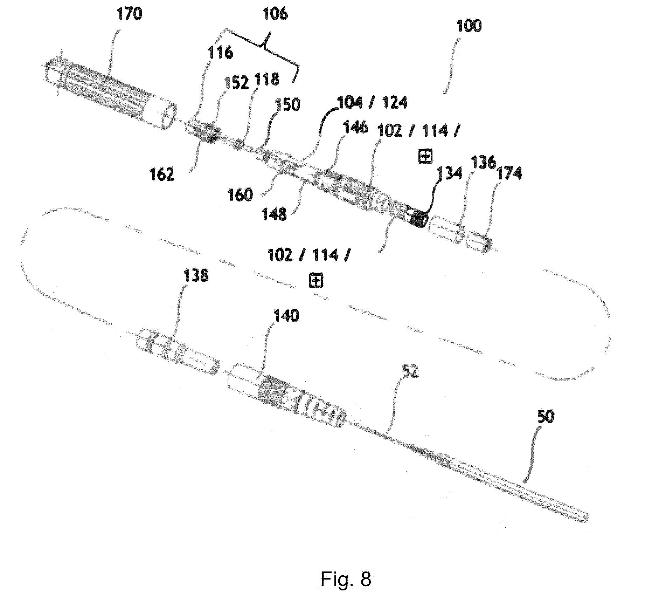

Fig. 8 is a pictorial snapshot of an exploded view of a hardened connector that interconnects a flat fiber optic cable with an optical fiber terminal in accordance with an embodiment of the disclosure. The hardened connector (100) interconnects a flat fiber optic cable with an optical fiber terminal (70). Construction of the hardened connector (100) as shown Fig. 8 is substantially similar to the construction of the hardened connector (100) as shown in Fig. 3 but different from the hardened connector (100) as shown in Fig. 3 in the sense that the body portion (112) is made of two sub-parts namely a first body portion (168) and a second body portion (172). Also, the hardened connector (100) as shown Fig. 8 further comprises a cable holder (174) which holds the flat fiber optic cable.

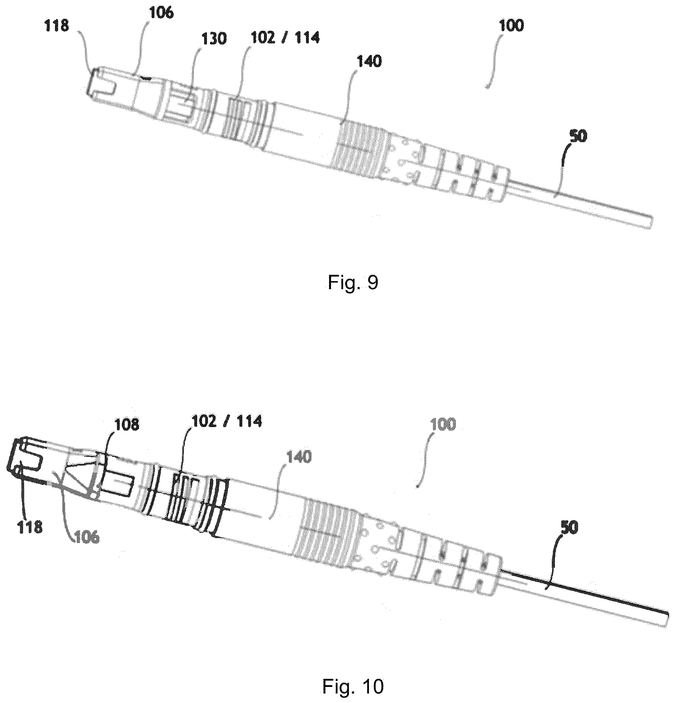

Fig. 9 is a pictorial snapshot of a first assembled view of a hardened connector having a multi-fiber optical plug, adapted to receive multiple optical fibers in accordance with an embodiment of the disclosure.
Fig. 10 is a pictorial snapshot a second assembled view of a hardened connector having a multi-fiber optical plug, adapted to receive multiple optical fibers in accordance with an embodiment of the disclosure;

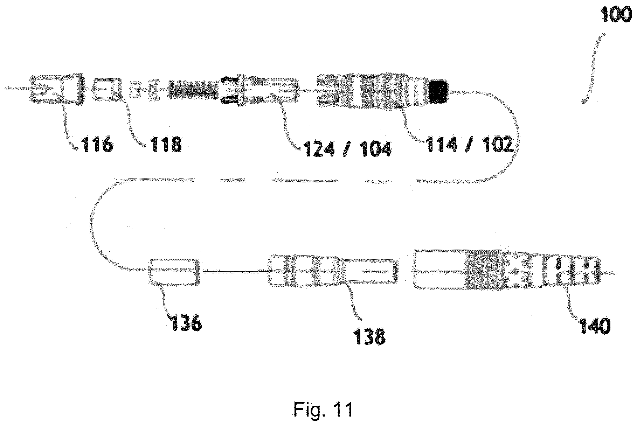

Fig. 11 is a pictorial snapshot an exploded view of a hardened connector having a multi-fiber optical plug adapted to receive multiple optical fibers in accordance with an embodiment of the disclosure;

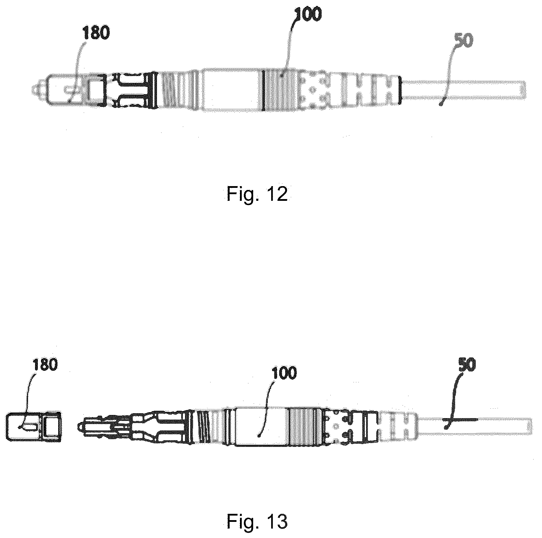

Fig. 12 is a pictorial snapshot an assembled view of a hardened connector with an outer cover, the outer cover allowing the hardened connector to be connected to a standard Subscriber Connector (SC connector) adaptor socket, in accordance with an embodiment of the disclosure;
Fig. 13 is a pictorial snapshot an exploded view of a hardened connector and an outer cover, the outer cover allowing the hardened connector to be connected to a standard SC connector adapter, in accordance with an embodiment of the disclosure;

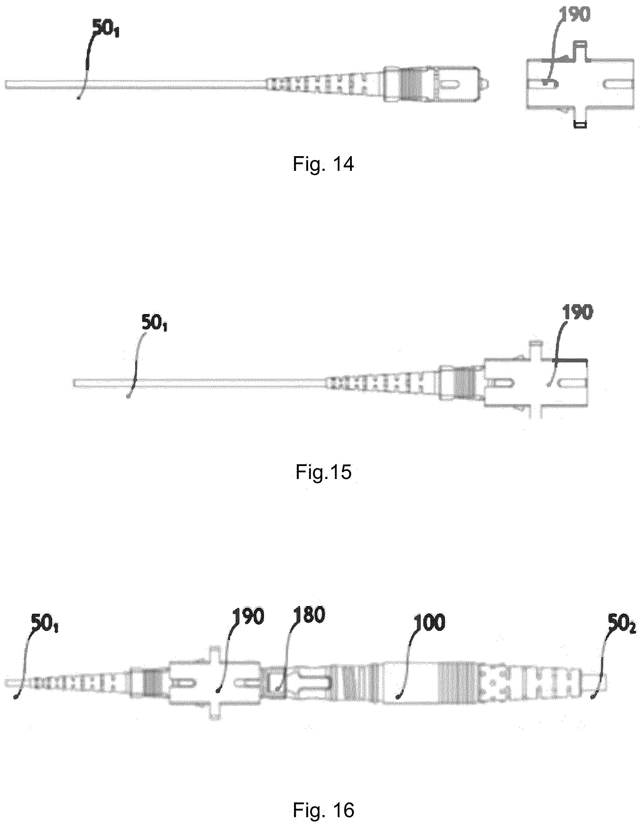

Fig. 14 is a pictorial snapshot an exploded view of fiber optic cable assembly and a standard SC connector adapter;
Fig. 15 is a pictorial snapshot an assembled view of fiber optic cable and a standard SC connector adapter;
Fig. 16 is a pictorial snapshot an assembled view of a hardened connector with an outer cover being connected to the fiber optic cable having the standard SC connector adapter connected thereto, in accordance with an embodiment of the disclosure;

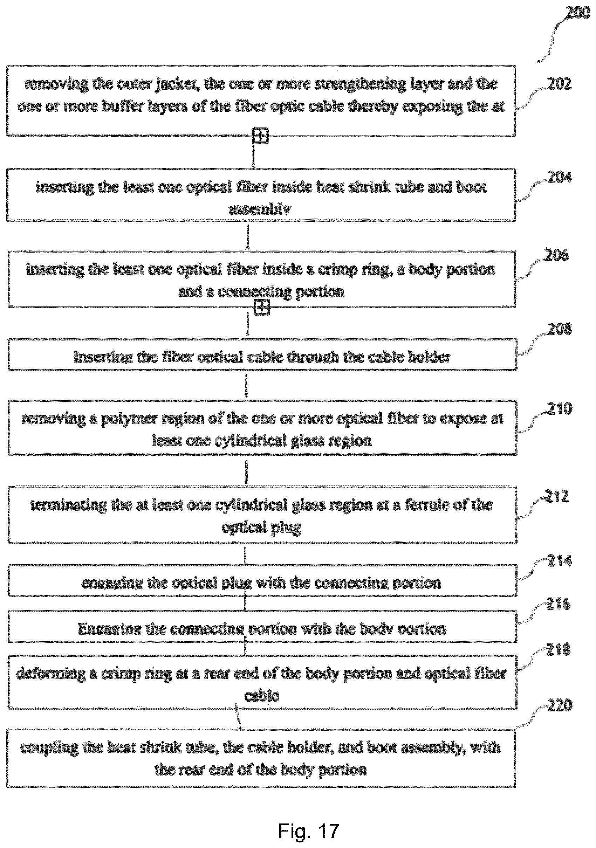

Fig. 17 is a pictorial snapshot a flow chart for connecting the fiber optic cable having the hardened connector to an optical fiber terminal, in accordance with an embodiment of the disclosure; and

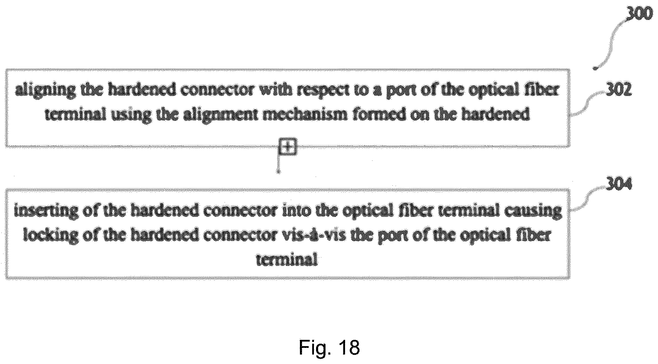

Fig. 18 is a pictorial snapshot of a flow chart for connecting the hardened connector to the optical fiber terminal, in accordance with an embodiment of the disclosure.

Referring to Fig.9 to Fig. 18.

The hardened connector (100) comprises a first part (102), a second part (104), and a third part (106). In particular, the first part (102) comprises a body portion (114); the third part (106) comprises a optical plug (116) comprising ferrule, especially a multi-fiber ferrule (118); and the second part (102) comprises a connecting portion (124). Moreover, the first part (102), a second part (104), and a third part (106) are disposed along a length direction of the hardened connector (100). Further, the second part (104) which is the connecting portion (124) connects the first part (102) i.e. the body portion (114) to the third part (106) i.e. the optical plug (116). The optical signal propagating through the plurality of optical fibers (52) enters into the multi-fiber ferrule (118) and is then transmitted to the optical fiber terminal (70).

In accordance with an embodiment of the present disclosure, the hardened connector (100) may further comprise a crimp ring (136) to hold the fiber optic cable (50). The crimp ring (136) holds the strengthening layer (56) outside the body portion (114) of the hardened connector (100) and allows only optical fiber (52) to enter inside the body portion (114) of the hardened connector (100). In particular, the hardened connector (100) may further comprise a heat shrink tube (138) to provide sealing at the crimp ring (136). Moreover, the heat shrink tube (138) may be connected in a rearward direction from a rear end (134) of the body portion (114). Further, the heat shrink tube (138) may be connected to the body portion (114) and may be adopted to surround a portion of the fiber optic cable (50) proximate to the end which is connected to the hardened connector (100). The heat shrink tube (138) may be slidably connected to the rear end (134) of the body portion (114).

In accordance with an embodiment of the present disclosure, the hardened connector (100) may further comprise a boot assembly (140) protruding in a rearward direction from a rear end (134) of the body portion (114). In particular, the boot assembly (140) may be located concentric to the heat shrink tube (138) and surrounding the heat shrink tube (138). Moreover, the boot assembly (140) may be connected to either the body portion (114) or the heat shrink tube (138) and may be adopted to surround a portion of the fiber optic cable (50) proximate to the end which is connected to the hardened connector (100). Although not illustrated, the hardened connector (100) may additionally comprise a cap (170) which is removably attachable to the hardened connector (100).

Further, the body portion (114) comprises a front end (146) and the connecting portion (124) comprises a rear end (148), with the front end (146) of the body portion (114) being engaged with the rear end (148) of the connecting portion (124). Furthermore, the front end (146) of the body portion (114) in particular comprises a first attachment member (156) and an intermediate portion of the connecting portion (124) comprises a first counter attachment member (158). The first attachment member (156) and the first counter attachment member (158) function to attach the body portion (114) and the connecting portion (124).

In accordance with an embodiment of the present disclosure, the connecting portion (124) comprises a front end (150) and the optical plug (116) with a rear end (152), with the front end (150) of the connecting portion (124) being engaged with the rear end (152) of the optical plug (116). In particular, the front end (150) of the connecting portion (124) comprises a second attachment member (160) and an intermediate portion of the optical plug (116) comprises a second counter attachment member (162). The second attachment member (160) and the second counter attachment member (162) function to attach the optical plug (116) and the connecting portion (124).

In accordance with an embodiment of the present disclosure, it can be seen that in an embodiment of the disclosure, the hardened connector (100) comprises an alignment mechanism (108) formed when at least two or the first part (102), the second part (104), and the third part (106) are engaged. By way of a non-limiting example, the alignment mechanism (108) comprises a first alignment part (110) formed on one of the first part (102), the second part (104), and the third part (106) and a second alignment part (112) formed on another of the first part (102), the second part (104), and the third part (106). Particularly, the body portion (114) comprises the first alignment part (110) and the connecting portion (124) comprises the second alignment part (112), the first alignment part (110) and the second alignment part (112) together forming the alignment mechanism (108).

Further, the front end (146) of the body portion (114) particularly comprises at least two fingers (126) spaced from each other and projecting in a front direction. The rear end (148) of the connecting portion (124) comprises a guiding channel (128) which is locatable between the two fingers (126) when the rear end (148) of the connecting portion (124) is inserted into the front end (146) of the body portion (114). The at least two fingers (126) together with the guiding channel (128) functions as the alignment mechanism (108).

In accordance with an embodiment of the present disclosure, the hardened connector (100) comprises a locking mechanism (130) formed when at least two or the first part (102), the second part (104), and the third part (106) are engaged.

By way of a non-limiting example, the locking mechanism (130) comprises a first locking part (164) formed on one of the first part (102), the second part (104), and the third part (106) and a second locking part (166) formed on another of the first part (102), the second part (104), and the third part (106). Particularly, the optical plug (116) comprises the first locking part (164) and the body portion (114) comprises the second locking part (166), the first locking part (164) and the second locking part (166) together forming the locking mechanism (130). Moreover, an intermediate portion of the optical plug (116) comprises a protruded skirt portion (132) which acts as the first locking part (164). When the front end (146) of the body portion (114) is engaged with the rear end (152) of the optical plug (116), the protruded skirt portion (132) which acts as the first locking part (164) comes in abutting relation with the front end (146) of the body portion (114), which acts as the second locking part (166).

Further, the protruded skirt portion (132) has a fourth diameter (D4) while the front end (146) of the body portion (114) has a fifth diameter (D5), such that the fourth diameter (D4) being greater than the fifth diameter (D5). Thus, the protruded skirt portion (132) i.e. the first locking part (164) and the front end (146) of the body portion (114) i.e. the second locking part (166) together define the locking mechanism (130).

In accordance with an embodiment of the present disclosure, the alignment mechanism (108) is angularly offset from the locking mechanism (130). For instance, the alignment mechanism (108) may be offset from the locking mechanism (130) by an angle equal to about 180° along a circumferential direction of the hardened connector (100).

Since the hardened connector (100) has a small form factor having a diameter less than or equal to 13 mm, a size of the optical fiber terminal can be reduced. Additionally, the hardened connector (100) of the present disclosure having the small form factor can be coupled to an optical fiber terminal of a standard size or the standard subscriber connector (SC connector) using an outer cover (180).

Now referring to Fig. 2 there is illustrated an assembled view of the outer cover (180) to a hardened connector (100) having the optical fiber cable connected thereto and referring to Fig. 3 there is illustrated an exploded view of the hardened connector (100) having the optical fiber cable connected thereto. In particular the optical plug (116) can be click-fitted to the outer cover (180). When the optical plug (116) is attached to the outer cover (180), the ferrule (118) projects out of the outer cover (180).

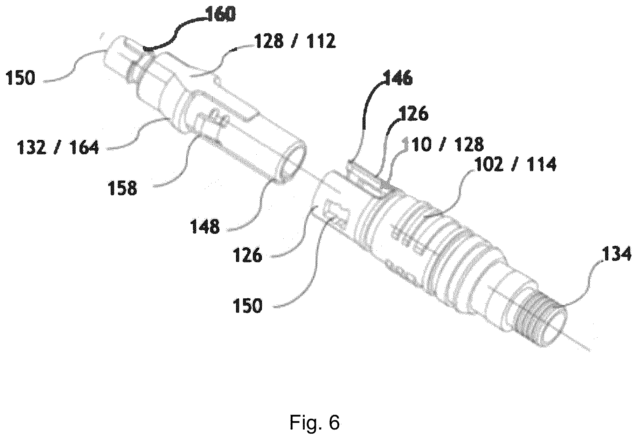

Once the outer cover (180) has been attached to the hardened connector (100), the same can be attached to a standard subscriber connector (SC connector) having yet another optical fiber connected thereto. Now referring to Fig. 4 there is illustrated an exploded view of a first fiber optic cable (50₁) and a standard SC connector adapter (190); referring to Fig. 5, there is illustrated an assembled view of the first fiber optic cable (50₁) and the standard SC connector adaptor socket (190); and referring to Fig. 6, there is illustrated an assembled view of hardened connector (100) having an outer cover (180) and a second fiber optic cable (50₂) attached thereto being connected to the standard SC connector adaptor socket (190). Thus, the hardened connector (100) can also be used for joining a first fiber optic cable (50₁) and a second fiber optic cable (50₂). In another aspect, the standard SC connector adapted socket (190) may be part of a complementary device such as but not limited to a patch panel, a fiber enclosure, a fiber box and more like the same.

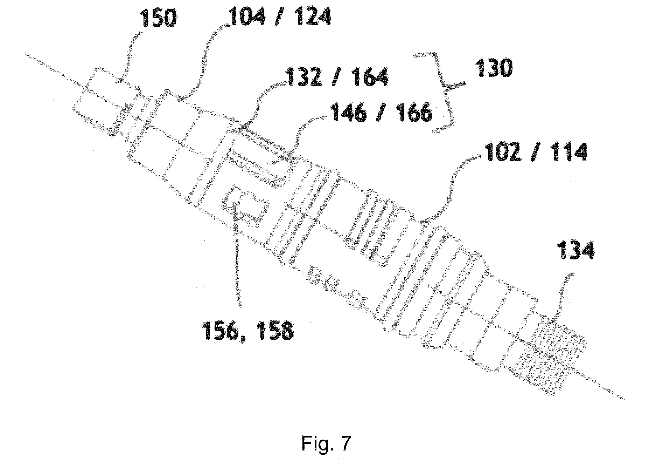

Since the hardened connector (100) has a novel construction, the disclosure furthermore provides a process of coupling at least one optical fiber (52) forming part of a fiber optic cable (50) to the hardened connector (100) as defined above. As mentioned above, the fiber optic cable (50) comprises at least one optical fiber (52) surrounded by one or more buffer layers (54), one or more strengthening layer (56) surrounding the one or more buffer layers (54) and an outer jacket (58) surrounding the one or more strengthening layer (56). To understand the process in detail, reference may be made to Fig. 7, which shows a flow chart of the process for coupling the fiber optic cable (50) to the hardened connector (100).

The process of coupling (200) comprises
removing (202) the outer jacket (58), the one or more strengthening layer (56) and the one or more buffer layers (54) of the fiber optic cable (50) thereby exposing the at least one optical fiber (52),
inserting (204) the least one optical fiber (52) inside heat shrink tube (138) and boot assembly (140), in case the hardened connector comprises heat shrink tube (138) and boot assembly (140).
inserting (206) the least one optical fiber (52) inside a crimp ring (136), a body portion (114) and a connecting portion (124) forming part of the hardened connector (100). In case the hardened connector (100) comprises cable holder (144), the fiber optical cable is inserted (208) through the cable holder (144),
removing (210) a polymer region (62) of the one or more optical fiber (52) to expose at least one cylindrical glass region (60),
terminating (212) the at least one cylindrical glass region (60) at a ferrule (118) of the optical plug (116) by locating the at least one cylindrical glass region (60) and a filler material in the optical plug (116). Thereafter, the optical plug (116) is engaged (214) with the connecting portion (124) and the connecting portion (124) is engaged (216) with the body portion (114),
deforming (218) a crimp ring (136) at a rear end (134) of the body portion (114) to retain the outer jacket (58), the one or more strengthening layer (56) and the one or more buffer layers (54) of the fiber optic cable (50).

Additionally, the process may comprise coupling (220) the heat shrink tube (138), the cable holder (144), and boot assembly (140), with the rear end (134) of the body portion (114).

The disclosure further provides a process of coupling (300) the hardened connector (100) as defined above to an optical fiber terminal (70). To understand the process in detail, reference may be made to Fig. 8, which shows a flow chart of the process for coupling the fiber optic cable (50) to the hardened connector (100).

The process (300) comprises aligning (302) the hardened connector (100) with respect to a port (72) of the optical fiber terminal (70) using the alignment mechanism (108) formed on the hardened connector (100). In particular, the alignment mechanism (108) formed on the hardened connector (100) is aligned with the counter alignment mechanism (74) formed in the port (72) of the optical fiber terminal (20). Thereafter, the hardened connector (100) is inserted (304) into the port (72) of the optical fiber terminal (70), inserting of the hardened connector (100) into the optical fiber terminal (70) causes locking of the hardened connector (100) vis-a-vis the port (72) of the optical fiber terminal (70) because, the locking mechanism (130) formed on the hardened connector (100) comes in contacting relation with the counter locking mechanism (76) formed in the port (72) of the optical fiber terminal (70).

Further, when the hardened connector (100) is being inserted into the port (72), the protruded skirt portion (132) which has the first diameter (D1) temporarily pushes the spring-loaded slider (which is the counter locking mechanism provided in the port of the optical fiber terminal) and once the protrude skirt portion (132) has advanced beyond the spring-loaded slider, the spring-loaded comes in contact with the front end (146) of the body portion (114) having the second diameter (D2). Thus, the spring-loaded slider attains its original state due to which the hardened connector (100) remains in a locked state with respect to the port (72). The only way to disengage the hardened connector (100) from the port (72) is to purposely move the the spring-loaded slider in a backward direction i.e. to a state where the spring-loaded does not contact with the front end (146) of the body portion (114) and thereafter pull the hardened connector (100) out of the port (72) of the optical fiber terminal (70).

Advantageously, the alignment mechanism provided on the hardened connector which is ease to manufacture, properly aligns the ferrule of the hardened connector with the ferrule in the optical fiber terminal port.

In particular, the locking mechanism on the hardened connector is ease to manufacture. Moreover, the hardened connector can be used for coupling both round fiber optic cable as well as flat fiber optic cable to the optical fiber terminal. Further, the alignment mechanism provided on the hardened connector allows for reducing a size of the hardened connector, typically, the hardened connector has a small form factor, having a diameter less than or equal to 13 mm.

Another advantage of the disclosure is that the locking mechanism provided on the hardened connector allows for reducing the size of the hardened connector, typically, the hardened connector has a small form factor, having a diameter less than or equal to 13 mm. Yet another advantage of the disclosure is that the hardened connector can be used for coupling not just one optical fiber, but plurality of optical fibers to the optical fiber terminal.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

Disjunctive language such as the phrase "at least one of X, Y, Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present.

In a case that no conflict occurs, the embodiments in the present disclosure and the features in the embodiments may be mutually combined. The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

In a case that no conflict occurs, the embodiments in the present disclosure and the features in the embodiments may be mutually combined. The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. A hardened connector (100) for engaging at least one optical fiber (52) with an optical fiber terminal (70), **characterised in that**:
a first part (102), a second part (104), and a third part (106);
the hardened connector (100) comprising one or more of an alignment mechanism (108) and a locking mechanism (130) formed when at least two of the first part (102), the second part (104), and the third part (106) are engaged.

2. The hardened connector (100) as claimed in claim 1, wherein the alignment mechanism (108) comprises a first alignment part (110) formed on one of the first part (102), the second part (104), and the third part (106) and a second alignment part (112) formed on another of the first part (102), the second part (104), and the third part (106).

3. The hardened connector (100) as claimed in claim 1, wherein the hardened connector (100) has a small form factor, having a diameter less than or equal to 13 mm.

4. The hardened connector (100) as claimed in claim 1, wherein:
the first part (102) comprises a body portion (114) conFig.d to receive at least one optical fiber (52), the at least one optical fiber (52) having at least one cylindrical glass region (60) surrounded by a polymer region (62), the at least one cylindrical glass regions (60) having a first diameter (D1) and at least one optical fiber (52) having a second diameter (D2);
the third part (106) comprises an optical plug (116) comprising ferule (118), the ferrule (118) comprising a ferrule bore having a third diameter (D3), the inner cover (116) being adapted to retain the at least one cylindrical glass region (60) of the at least one optical fiber (52);
the second part (102) comprises a connecting portion (124) connecting the optical plug (116) with the body portion (114);
the first diameter (D1), the second diameter (D2), and the third diameter (D3) follow the relationship D1 < D3 < D2;
the third diameter (D3) has a value greater than the first diameter (D1) but less than or equal to D1 plus 5 microns.

5. The hardened connector (100) as claimed in claim 4, wherein the body portion (114) comprises a first alignment part (110) and the connecting portion (130) comprises a second alignment part (112), the first alignment part (110) and the second alignment part (112) together forming the alignment mechanism (108).

6. The hardened connector (100) as claimed in claim 4, wherein the at least one optical fiber (52) passes through the body portion (114) and the connecting portion (124) before terminating at the ferule (118) of the optical plug (116).

7. The hardened connector (100) as claimed in claim 4, wherein the body portion (114) includes at least two fingers (126) spaced apart from one another and the connecting portion (124) comprises a guiding channel (128) which is located between the two fingers (126), the guiding channel (128) together with the at least two fingers (126) functioning as the alignment mechanism (108) to maintain alignment of the hardened connector (100) when the hardened connector (100) is coupled to the fiber terminal (70).

8. The hardened connector (100) as claimed in claim 1, wherein the locking mechanism (130) comprises a protruded skirt portion (132) formed at an intermediate portion of the connecting portion (124) or at an intermediate portion of the optical plug (116) and a front end of the body portion (114) that co-operates with the protruded skirt portion (132),
wherein the protruded skirt portion (132) having a fourth diameter (D4), the front end of the body portion (114) having a fifth diameter (D5), the fourth diameter (D4) being greater than the fifth diameter (D5), the protruded skirt portion (132) and the front end of the body portion (114) together defining the locking mechanism (130).

9. The hardened connector (100) as claimed in claim 4, wherein a rear end (134) of the body portion (114) includes a crimp ring (136) to hold at least one strengthening member (16) of the at least one optical fiber (10).

10. The hardened connector (100) as claimed in claim 9, wherein the rear end (134) of the body portion (114) includes a boot assembly (140) encapsulating the crimp ring (136) to provide flexibility to the at least one optical fiber (10).

11. A process of coupling the hardened connector (100) as claimed in claim 1 to an optical fiber terminal (70), **characterised in that**:
aligning the hardened connector (100) with respect to the optical fiber terminal (70) using the alignment mechanism (108) formed on the hardened connector (100); and
inserting the hardened connector (100) into the optical fiber terminal (70), inserting of the hardened connector (100) into the optical fiber terminal (70) causing locking of the hardened connector (100) vis-a-vis the optical fiber terminal (70) using a locking mechanism (130) formed on the hardened connector (100).

12. A process of coupling at least one optical fiber (52) forming part of a fiber optic cable (50) to the hardened connector (100) as claimed in claim 1, the fiber optic cable (50) comprises at least one optical fiber (52) surrounded by one or more buffer layers (54), one or more strengthening layer (56) surrounding the one or more buffer layers (54) and an outer jacket (58) surrounding the one or more strengthening layer (56), the process comprising:
removing the outer jacket (58), the one or more strengthening layer (56) and the one or more buffer layers (54) of the fiber optic cable (50) thereby exposing the at least one optical fiber (52);
inserting the least one optical fiber (52) inside a body portion (114) and a connecting portion (124) forming part of the hardened connector (100);
removing a polymer region (62) of the one or more optical fiber (52) to expose at least one cylindrical glass region (60);
terminating the at least one cylindrical glass region (60) at a ferrule (118) of the optical plug (116);
engaging the optical plug (116) with the connecting portion (124); and
engaging connecting portion (124) the body portion (114).

13. A hardened connector (100) for engaging at least one optical fiber (52) with an optical fiber terminal (70) **characterised in that**:
an optical plug (116) to terminate exactly one optical fiber (52); and
an outer cover (180) mounted on the optical plug (116) to allow the hardened connector (100) to connect with a connector adapter socket (190), the outer cover (180) has a width less than 9 mm.
wherein the outer cover (180) is an SC connector outer cover mounted over the optical plug (116);
wherein the connector adapter (180) is a SC connector adapter.

14. A hardened connector (100) for engaging at least one optical fiber (52) with an optical fiber terminal (70), the hardened connector (100) **characterised in that**:
a first part (102), a second part (104) and a third part (106);
the second part (104) mediates a coupling between the first part (102) and the third part (106), and at least one of the first part (102), the second part (104) and the third part (106) is made of Polycarbonate-Acrylonitrile Butadiene Styrene (PC-ABS) material and the like, and
a diameter of the hardened connector (100) being less than 13 mm.

15. A pre-connectorized cable, **characterised in that**:
an optical fiber cable (50) with at least one optical fiber (52) and one or more strengthening layer (56) packed inside an outer jacket (58);
a hardened connector (100) having a tubular housing with an opening to enter the optical fiber (52) inside the tubular housing, the opening includes a crimp ring (136) for holding the one or more strength layer (56) outside the tubular housing;
wherein the tubular housing holds a ferrule (118) opposite to the opening and is a multi-part assembly;
wherein the crimp ring (136) allows the at least one optical fiber (52) to enter inside the tubular housing;
wherein the optical fiber cable (50) is at least one of the round cable or a flat cable.
